# EUROPÄISCHE PATENTSCHRIFT

(11) **EP 0 546 003 B1**
(45) Veröffentlichungstag und Bekanntmachung des Hinweises auf die Patenterteilung: **21.12.1994**
(21) Anmeldenummer: 91915327.0
(22) Anmeldetag: 30.08.1991
(51) Int. Cl.: H01H 13/70

(54) **DRUCKSCHALTELEMENT**
PRESSURE SWITCH
INTERRUPTEUR A PRESSION

(30) Priorität: 30.08.1990 DE 9012407 U; 01.09.1990 DE 9012560 U
(43) Veröffentlichungstag der Anmeldung: 16.06.1993
(73) Patentinhaber: PLATZ, Karl-Otto, 51580 Reichshof (DE)
(72) Erfinder: PLATZ, Karl-Otto, 51580 Reichshof (DE)
(74) Vertreter: Dallmeyer, Georg, Dipl.-Ing.
(86) Internationale Anmeldenummer: EP9101645
(87) Internationale Veröffentlichungsnummer: WO9204724

(56) Entgegenhaltungen:
- WO-A-81/00787
- DE-A- 3 410 524
- DE-A- 3 411 477
- DE-A- 3 715 871
- DE-B- 2 106 732
- US-A- 4 485 279
- US-A- 4 901 074

## Beschreibung

### Druckschaltelement

Die Erfindung betrifft ein Druckschaltelement aus mindestens zwei im Abstand voneinander angeordneten Trägermaterialschichten, die mindestens einseitig elektrisch leitend beschichtet sind und zwischen den einander zugewandten elektrisch leitenden Schichten einen elastischen Abstandhalter aufweisen, wobei sich die elektrisch leitenden Schichten bei Druckbelastung der oberen flexiblen Trägermaterialschicht in einem Kontaktbereich berühren.

Derartige Druckschaltelemente sind als Touch-Panels in Anzeige-Displays bekannt. Die Touch-Panels bestehen üblicherweise aus transparenten Kunststoff-Folien, deren Innenoberflächen elektrisch leitend beschichtet sind. Zum Abstützen dieser Folien werden im Luftzwischenraum Abstandhalter eingeklebt, wobei ein außen an dem Kontaktbereich umlaufender Abstandhalter luftdicht mit den Kunststoff-Folien zur Stabilisierung des inneren Luftdrucks verschweißt wird und dadurch gleichzeitig die obere Folie abstützt. Innerhalb des Kontaktbereichs sind zusätzlich elastische Spacer angeordnet, um eine Rückstellung der Folien zu gewährleisten. Das bekannte Druckschaltelement hat den Nachteil, einen hermetisch abgeschlossenen Luftraum zu benötigen, der keinen Druckausgleich zuläßt. Bei erheblichen Abweichungen vom normalen atmosphärischen Druck, z.B. bei der Anwendung in Unterwasserfahrzeugen oder in der Luft- und Raumfahrt, und bei hohen Temperaturen erzeugen die Luftdruckveränderungen Haarrisse in der aufgedampften elektrisch leitfähigen Kontaktschicht, was zu einem Funktionsausfall führt. In großen Höhen dehnt sich der Spacer im Kontaktbereich aus. Dadurch wird der Schaltweg der Kontaktfolie verändert und die vorgegebenen elektronischen und mechanischen Parameter, wie z.B. Druckpunkt, werden nicht eingehalten. Weitere Nachteile der bekannten Touch-Panels bestehen darin, daß die Kunststoff-Folien mechanisch und chemisch nur eine begrenzte Widerstandsfähigkeit aufweisen und im übrigen nicht antistatisch sind. Auch besteht bei größeren Temperaturschwankungen die Gefahr einer Rißbildung in der elektrisch leitenden Schicht auf Grund erheblich unterschiedlicher Ausdehnungskoeffizienten zwischen der leitenden Schicht und dem Kunststoffträger.

Die DE-B2-21 06 732 beschreibt eine elektrische Membrantastatur, bei der auf einer Unterlage aus Isoliermaterial wenigstens ein unteres Kontaktelement und mit Abstand wenigstens ein oberes Kontaktelement an der Unterseite einer Membran befestigt ist, die auf einer auf der Unterlage befindlichen, im Bereich der Kontaktelemente jeweils ein Loch aufweisenden, isolierenden Zwischenschicht aufliegt. In dem Loch der Zwischenschicht befindet sich ein elastischer Stößel, der als Druckübertragungskern dient.

Der US-A-4,901,074 ist ein gattungsgemäßes Druckschaltelement zu entnehmen, das aus folgenden Elementen besteht: einem starren Substrat aus Glas, einer ersten leitenden Schicht auf diesem Substrat, einer elektrisch isolierenden Zwischenschicht auf der ersten leitenden Schicht mit einer Öffnung, die einen Schalterkontaktbereich bildet, einer zweiten leitenden Schicht oberhalb der isolierenden Zwischenschicht und einer Glasoberschicht auf der zweiten leitenden Schicht, die so dünn ist, daß sie biegbar ist und in dem Schalterkontaktbereich die zweite leitende Schicht gegen die erste leitende Schicht drücken kann, wenn die Glasoberschicht gedrückt wird.

Der Erfindung liegt die Aufgabe zugrunde, ein Druckschaltelement zu schaffen, dessen Funktionsfähigkeit auch bei hohen Druck- und Temperaturschwankungen zuverlässig gewährleistet ist bzw. einen Kontaktauslöser mit hoher mechanischer und chemischer Widerstandsfähigkeit zu schaffen, der in Glasflächen integrierbar ist.

Zur Lösung dieser Aufgabe dienen erfindungsgemäß die Merkmale des Anspruchs 1.

Die Verwendung einer elastischen/starren Zwischenschicht zwischen einer Trägerscheibe aus relativ dickem Glas und einer Deckscheibe aus relativ dünnem Glas ermöglicht es in vorteilhafter Weise, ein Druckschaltelement aus Glas zu schaffen, das ohne Glasbruch betätigt werden kann. Auf Grund des natürlichen Rückstellverhaltens der Deckscheibe aus relativ dünnem Glas wird kein Spacer benötigt. Der elastische/starre Abstandhalter im Umfeld des Kontaktbereiches kann derart verkleinert werden, daß eine Folie als Zwischenschicht genügt. Die Verwendung von Glas als Trägermaterial hat des weiteren den Vorteil, ein kratzfestes Druckschaltelement zu schaffen, das eine hohe chemische Beständigkeit aufweist und antistatisch ist. Die Temperatur-Ausdehnungskoeffizienten und das Verformungsverhalten unter Druck von Glas und elektrisch leitender Schicht weisen einen geringeren Unterschied im Vergleich zu Kunststoff-Folien auf, so daß die Gefahr einer Rißbildung in der elektrisch leitenden Schicht erheblich verringert ist.

Bevorzugt ist vorgesehen, daß das Verhältnis der Deckscheibendicke zur Trägerscheibendicke ca. 10 bis 20, vorzugsweise 17 beträgt. Bei diesem Verhältnis läßt sich für die Deckscheibe eine ausreichende Elastizität und für die Trägerscheibe eine ausreichende Steifheit erzielen.

Bei einem bevorzugten Ausführungsbeispiel ist vorgesehen, daß die Deckscheibe eine Dicke von ca. 0,1 mm bis 0,2 mm, vorzugsweise 0,18 mm aufweist. Eine derartige Deckscheibendicke ist geeignet, um ein bruchsicheres Druckschaltelement für manuelle Betätigung zu schaffen.

Die elastische Zwischenschicht kann zum Druckausgleich an mindestens einer Seite offengehalten sein. Auf diese Weise ist die Betätigung des Druckschaltelementes von den atmosphärischen Druckbedingungen unabhängig. Die Rückstellung des Druckschaltelementes erfolgt allein auf Grund der Elastizität des Glasträgermaterials, gegebenenfalls mit der Unterstützung des elastischen Abstandhalters.

Die Träger- und/oder die Deckscheibe können thermisch oder chemisch gehärtet sein. Dies erhöht die Druckstabilität des Druckschaltelementes aus Glas.

Bei einer Weiterbildung der Erfindung ist vorgesehen, daß der Randbereich von Träger- und Deckscheibe mit einer Randabdeckung abgedichtet ist.

Vorzugsweise ist dabei die Randabdeckung mit Belüftungsöffnungen versehen, die einen Druckausgleich mit der Umgebung ermöglichen.

Dabei kann zwischen Träger- bzw. Deckscheibe und Randabdeckung ein Filtermaterial angeordnet sein. Dieses rückseitig auf die Randabdeckung eingearbeitete Filtermaterial schützt das Druckschaltelement vor Verschmutzung.

Außerdem kann zwischen Träger bzw. Deckscheibe und Randabdeckung ein Entfeuchtungsmittel, z.B. Silikagel, angeordnet sein. Dieser Entfeuchter schützt vor einer Korrosion der elektrisch leitenden Schichten.

Bei einem Ausführungsbeispiel ist vorgesehen, daß der Zwischenraum über die Zwischenschicht im Kontaktbereich hermetisch abgedichtet ist. Dabei können in der Trägerscheibe Durchlässe zum Zwischenraum angeordnet sein, die einen Druckausgleich ermöglichen. Ein solches Druckschaltelement eignet sich zur Verwendung in aggressiver Umgebung z.B. bei hoher Luftfeuchte.

Bei einem weiteren Ausführungsbeispiel ist vorgesehen, daß die elektrisch leitenden Schichten bei einer Mittelkontaktierung im Randbereich eine isolierende Unterbrechung aufweisen. Die Unterbrechungen dienen zur Vermeidung von Korrosion der elektrisch leitenden Schichten an der Klebekante der elastischen Zwischenschicht durch Wasserdampfdiffusion, die zur Zerstörung der Schaltmatrix führen kann. Die umlaufende isolierende Unterbrechung weist vorzugsweise eine Breite von ca. 150 bis 500 µm auf.

Die Trägerscheibe kann im Verhältnis zur Deckscheibe im Kontaktbereich konkav gekrümmt sein. Eine derartige Gestaltung der Trägerscheibe ist bei einem hermetisch abgedichteten Druckschaltelement vorteilhaft, wobei die Wölbung in einem bestimmten Verhältnis zum Luftvolumen des Systems steht.

Bei einer Weiterbildung ist vorgesehen, daß die Trägerscheibe unterhalb des Kontaktbereiches auf der der Deckscheibe entgegengesetzten Seite beleuchtete Sacklochbohrungen aufweist. Die Sacklöcher können mit einer seitlichen oder senkrechten Lichtquelle beleuchtet sein, wodurch auf Grund der Lichtbrechung an den Innenwänden des Sackloches eine beleuchtete Schiltermarkierung erzeugt wird.

Im folgenden werden unter Bezugnahme auf die Zeichnungen Ausführungsbeispiele der Erfindung näher erläutert.

Es zeigen
- Fig. 1: einen Querschnitt durch das Druckschaltelement,
- Fig. 2: einen Querschnitt durch das Druckschaltelement gemäß Fig. 1 bei Druckausübung auf die Deckscheibe,
- Fig. 3: ein zweites Ausführungsbeispiel mit konkav gekrümmter Trägerscheibe,
- Fig. 4: ein Ausführungsbeispiel mit in der Randabdichtung vorgesehenen Belüftungsöffnungen,
- Fig. 5: die Anwendung der Druckschaltelemente in einer Anzeigetafel,
- Fig. 6: einen Querschnitt durch eine Trägerscheibe mit zwei Druckschaltelementen und
- Fig. 7: ein weiteres Ausführungsbeispiel.

Das Druckschaltelement 1 besteht aus einer unteren relativ dicken Trägerscheibe 12 und einer parallel dazu und mit Abstand von der Trägerscheibe 12 verlaufenden Deckscheibe 14 aus Glas, zwischen denen eine Zwischenschicht 10 vorzugsweise aus einer Polyvinylbutyralfolie als Abstandhalter 6 angeordnet ist. Als Zwischenschicht 10 kann auch ein doppelseitig klebendes, vorzugsweise transparentes Band verwendet werden. Die Zwischenschicht 10 läßt zwischen der Trägerscheibe 12 und der Deckscheibe 14 einen Kontaktbereich 22 frei, der in der Draufsicht vorzugsweise kreisförmig aber auch anders z.B. rechteckig oder quadratisch gestaltet sein kann.

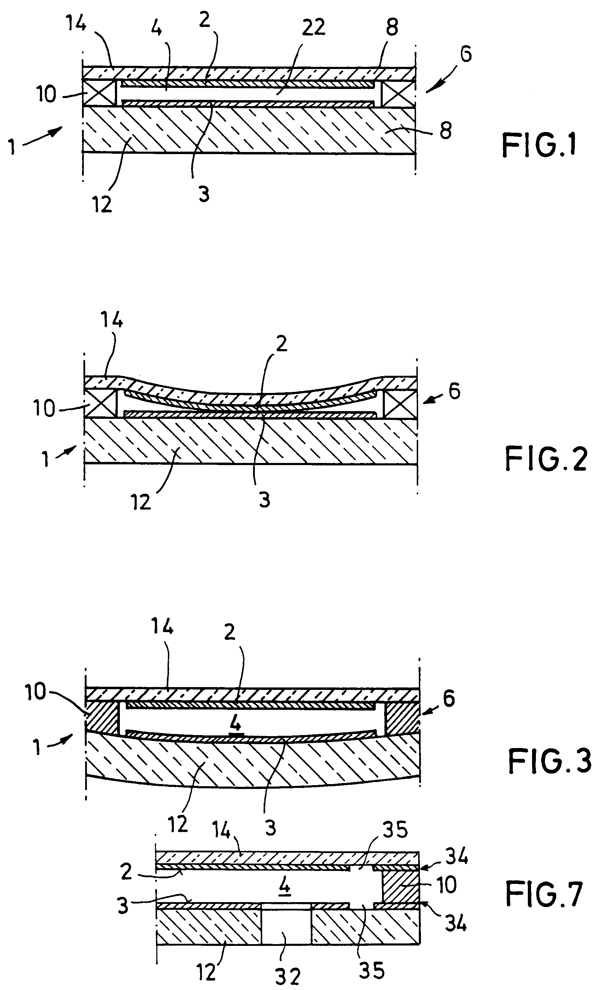

Die Trägerscheibe 12 und die Deckscheibe 14 sind auf den einander gegenüberliegenden Innenflächen mit elektrisch leitenden Schichten 2,3 versehen, die bei Berührung einen Schaltvorgang ermöglichen. Hierzu kann, wie aus Fig. 2 ersichtlich, die relativ dünne Deckscheibe 14 durch Druckbeaufschlagung in dem Kontaktbereich 22 soweit eingedrückt werden, daß sich die elektrisch leitenden Schichten 2,3 berühren. Bei einer Deckscheibe 14 mit ca. 0,5 mm Dicke und einer Trägerscheibe 12 mit einer Dicke von ca. 6 mm beträgt die Dicke der Zwischenschicht 10 0,3 bis 0,5 mm, vorzugsweise ca. 0,38 mm.

Dabei ist wesentlich, daß die den Abstandhalter 6 bildende Zwischenschicht 10 elastisch ist und dadurch die Glasbruchgefahr bei der dünnen Deckscheibe 14 verringert.

Die Zwischenschicht 10 weist einen Durchlaß 30 nach außen auf, so daß bei Betätigung des Druckschaltelementes 1 ein Druckausgleich im Raum des Kontaktbereiches erfolgen kann.

Zur zusätzlichen Druckstabilität des Druckschaltelementes 1 können Träger- und Deckscheibe 12,14 thermisch oder chemisch gehärtet sein.

Schließt die Zwischenschicht 10 den Zwischenraum 4 im Kontaktbereich hermetisch ab, ist die Trägerscheibe 12 vorzugsweise relativ zur Deckscheibe 14, wie aus Fig.3 ersichtlich, konkav gewölbt.

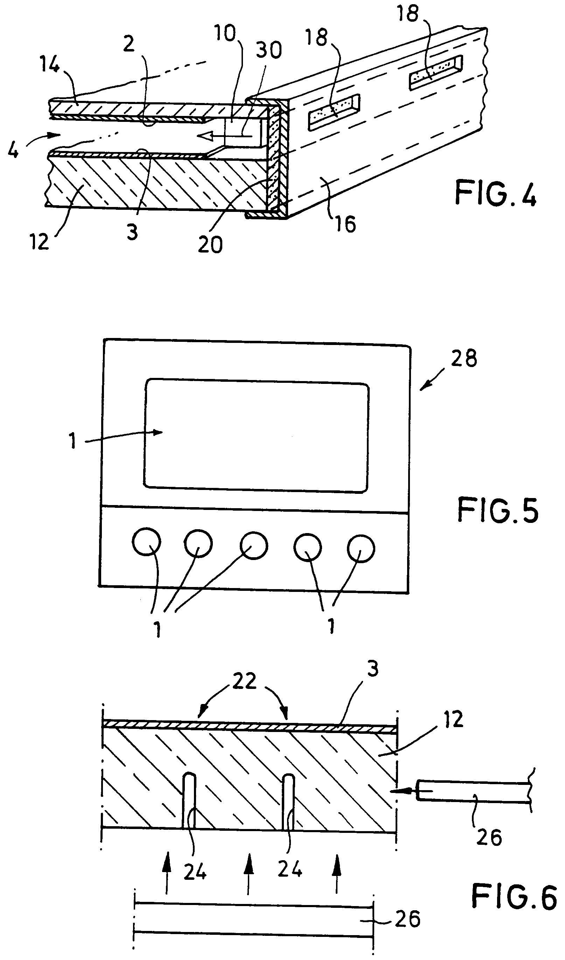

Bei dem Ausführungsbeispiel der Fig. 4 ist eine Randabdeckung 16 für das Druckschaltelement 1 dargestellt, das beispielsweise aus einem Randabdeckband bestehen kann. Das Randabdeckband weist Lüftungsöffnungen 18 auf, die in Verbindung mit einem oder mehreren Durchlässen 30 einen Druckausgleich in dem Zwischenraum 4 im Kontaktbereich 22 ermöglichen.

Zwischen dem Randabdeckband, das sowohl Träger- als auch Deckscheibe 12,14 umfaßt und dem Druckschaltelement 1 kann zusätzlich ein streifenförmiges Filtermaterial 20 eingebracht sein, das die Belüftungsöffnungen 18 und den Spalt zwischen Träger- und Deckscheibe 12,14 abdeckt.

Anstelle des Filtermaterials 20 oder auch zusätzlich zu dem Filtermaterial kann zwischen Abdeckband und Druckschaltelement 1 auch ein Entfeuchtungsmittel vorgesehen sein, daß die elektrisch leitenden Schichten vor Korrosion schützt.

Das Druckschaltelement 1 wird vorzugsweise in Glasflächen vor Anzeigeeinrichtungen, z.B. Bildschirmen, verwendet, wobei es dort z.B. für eine frei programmierbare Menüauswahl eingesetzt werden kann.

Als großflächigeres Druckschaltelement in digitaler Ausführung können eine oder mehrere Druckpositionen innerhalb des Kontaktbereiches mit Hilfe einer X-Y-Matrix in der elektrisch leitenden Schicht festgestellt werden.

Das Druckschaltelement 1 kann durch Tönung der Träger- und/oder Deckscheibe 12,14 bzw. des Kontaktbereichs 22 auch farbig gestaltet sein.

Um Doppelspiegelung des vorzugsweise transparenten Druckschaltelementes 1 vor einer Glasoberfläche der Anzeigeoberfläche zu vermeiden, werden die äußeren Oberflächen der Träger- und Deckscheibe 12,14 vorzugsweise zusätzlich mit aufgedampften Schichten oder geätzten Oberflächen entspiegelt.

Die Trägerscheibe 12 kann, wie aus Fig.6 ersichtlich, auf der der Deckscheibe 14 gegenüberliegenden Seite Sacklochbohrungen 24 aufweisen, die von einer seitlich und/oder unter der Trägerscheibe 12 angeordneten Lichtquelle 26 beleuchtet werden. Durch die Lichtbrechung an den Innenwänden der Sacklochbohrungen 24 wird eine beleuchtete Druckpunktmarkierung im Kontaktbereich 22 in der transparenten Glasfläche des Druckschaltelementes 1 erzeugt.

Zur Verwendung in aggressiver Umgebung, z.B. bei hoher Luftfeuchte, wird die elastische Zwischenschicht 10 luftdicht ausgeführt. Der benötigte Druckausgleich im Druckschaltelement 1 wird durch mindestens zwei Durchlässe 32 in der rückwärtigen Trägerscheibe 12 hergestellt. Diese Durchlässe 32 können auch aus Langlöchern bestehen und dienen gleichzeitig zur Durchführung der Kontaktieranschlüsse auf den elektrisch leitenden Flächen 2,3. Die Belüftung kann ähnlich wie bei dem Durchlaß 30 durch ein Filtermaterial 20 hindurch erfolgen.

Zur Vermeidung von Korrosion der elektrisch leitenden Schichten 2,3 an der Klebekante der elastischen Zwischenschicht 10 durch Wasserdampfdiffusion an der kritischen Stelle 34, die zur Zerstörung der Schaltmatrix führt, wird bei einer Mittelkontaktierung der elektrisch leitenden Schichten 2,3 die leitende Schicht 2,3 im Randbereich umlaufend durch eine isolierende Unterbrechung 35 in einer Breite von ca. 150 bis 500 µm geschützt.

## Patentansprüche

1. Druckschaltelement (1) aus mindestens zwei im Abstand voneinander angeordneten Trägermaterialschichten (8), die mindestens einseitig elektrisch leitend beschichtet sind und zwischen den einander zugewandten elektrisch leitenden Schichten einen elastischen/starren Abstandhalter aufweisen, wobei sich die elektrisch leitenden Schichten bei Druckbelastung der oberen flexiblen Trägermaterialschicht in einem Kontaktbereich berühren, wobei
- die Trägermaterialschichten (8) aus Glas bestehen,
- eine Trägermaterialschicht (8) aus einer dünnen Deckscheibe (14) und die andere Trägermaterialscheibe (8) aus einer dicken Trägerscheibe (12) besteht und das Verhältnis der Trägerscheibendicke zur Deckscheibendicke ca. 10 bis 20 beträgt und
- der Abstandhalter (6) aus einer Zwischenschicht (10) aus elastischem/starrem Kunststoff besteht,
**dadurch gekennzeichnet**, daß
die elastische Zwischenschicht (10) zum Druckausgleich an mindestens einer Wandseite einen Durchlaß (30) aufweist,
der Randbereich von Träger- und Deckscheibe (12,14) mit einer Randabdeckung (16) abgedichtet ist, und
die Randabdeckung (16) mit Belüftungsöffnungen (18) versehen ist.

2. Druckschaltelement nach Anspruch 1, dadurch gekennzeichnet, daß die Deckscheibe (14) eine Dicke von ca. 0,1 bis 0,2 mm, vorzugsweise 0,18 mm aufweist.

3. Druckschaltelement nach einem der Ansprüche 1 oder 2, dadurch gekennzeichnet, daß zwischen Träger- bzw. Deckscheibe (12,14) und Randabdeckung (16) ein Filtermaterial (20) angeordnet ist.

4. Druckschaltelement nach einem der Ansprüche 1 bis 3, dadurch gekennzeichnet, daß Träger- und Deckscheibe (12,14) transparent sind.

5. Druckschaltelement nach einem der Ansprüche 1 bis 4, dadurch gekennzeichnet, daß die Trägerscheibe (12) relativ zur Deckscheibe (14) im Kontaktbereich (22) konkav gekrümmt ist.

6. Druckschaltelement nach einem der Ansprüche 1 bis 5, dadurch gekennzeichnet, daß die elektrisch leitenden Schichten (2,3) bei einer Mittelkontaktierung im Randbereich eine isolierende Unterbrechung (35) aufweisen.

7. Druckschaltelement nach Anspruch 6, dadurch gekennzeichnet, daß die Unterbrechung (35) kanalförmig ist und eine Breite von ca. 150 bis 500 µm aufweist.

## Claims

1. Press switch element (1) of at least two spaced apart layers (8) of support material, each of which is provided with an electrically conductive coating on at least one side and having a resilient/rigid spacer arranged between the electrically conductive layers facing each other, said electrically conductive layers coming into contact within a contact area when a pressure acts upon the upper flexible support material layer, wherein
- the layers (8) of support material are made of glass,
- one layer (8) of support material is a thin cover pane (14) and the other layer (8) of support material is a thick support pane (12) and the ratio of the support pane thickness to the cover pane thickness is about 10 to 20, and
- the spacer (6) is an intermediate layer (10) of a resilient/rigid plastics material,
characterised in that
- said resilient intermediate layer (10) has a passage (30) provided on at least one wall side for pressure balance,
- the edge portion of said support and said cover panes (12, 14) is sealed by an edge cover (16), and
- said edge cover (16) is provided with vent holes (18).

2. Press switch element as defined in claim 1, characterised in that said cover pane (14) has a thickness of about 0.1 to 0.2 mm, preferably 0.18 mm.

3. Press switch element as defined in claim 1 or 2, characterised in that a filter material (20) is disposed between said support pane or said cover pane (12, 14) and said edge cover (16).

4. Press switch element as defined in one of claims 1 to 3, characterised in that said support and cover panes (12, 14) are transparent.

5. Press switch element as defined in one of claims 1 to 4, characterised in that, in said contact area (22), said support pane (12) is concavely curved relative to said cover pane (14).

6. Press switch element as defined in one of claims 1 to 5, characterised in that the edge portions of said electrically conductive layers (2, 3) have an insulating interruption (35), if a central contacting is provided.

7. Press switch element as defined in claim 6, characterised in that said interruption (35) is channel-shaped and has a width of about 150 to 500 µm.

## Revendications

1. Elément d'interrupteur à pression (1), composé d'au moins deux couches de matériau support (8) disposées à distance l'une de l'autre, qui sont revêtues de façon électroconductrice au moins d'un côté et présentent, entre les couches électroconductrices orientées l'une vers l'autre, un élément d'écartement élastique/rigide, les couches électroconductrices venant en contact l'une avec l'autre, dans une zone de contact, en cas de pression sur la couche de matériau support flexible supérieure, dans lequel :
- les couches de matériau support (8) sont en verre,
- l'une des couches de matériau support (8) consiste en un mince disque de recouvrement (14) et l'autre couche de matériau support (8) en un disque support (12) épais et le rapport entre l'épaisseur du disque support et l'épaisseur du disque de recouvrement est d'environ 10 à 20, et
- l'élément d'écartement élastique/rigide (6) consiste en une couche intermédiaire (10) en matière plastique élastique/rigide,
caractérisé par le fait que
la couche intermédiaire élastique (10) présente, pour la compensation de la pression, un passage (30) dans au moins une face de paroi,
la zone de bordure du disque support et du disque de recouvrement (12, 14) est obturée par un recouvrement de bordure (16), et
que le recouvrement de bordure (16) est pourvu d'orifices d'aération (18).

2. Elément d'interrupteur à pression selon la revendication 1, caractérisé par le fait que le disque de recouvrement (14) présente une épaisseur d'environ 0,1 à 0,2 mm, de préférence de 0,18 mm.

3. Elément d'interrupteur à pression selon l'une des revendications 1 ou 2, caractérisé par le fait qu'entre le disque support ou le disque de recouvrement (12, 14) et le recouvrement de bordure (16) est disposé un matériau filtrant (20).

4. Elément d'interrupteur à pression selon l'une des revendications 1 à 3, caractérisé par le fait que le disque support et le disque de recouvrement (12, 14) sont transparents.

5. Elément d'interrupteur à pression selon l'une des revendications 1 à 4, caractérisé par le fait que le disque support (12) est, dans la zone de contact (22). bombé concave par rapport au disque de recouvrement (14).

6. Elément d'interrupteur à pression selon l'une des revendications 1 à 5, caractérisé par le fait que les couches électroconductrices (2, 3) présentent, en cas de contact central, une interruption isolante (35) dans la zone de bordure.

7. Elément d'interrupteur à pression selon la revendication 6, caractérisé par le fait que l'interruption est en forme de canal et présente une largeur d'environ 150 à 500 µm.
